(19) Europäisches Patentamt
European Patent Office
Office européen des brevets

(11) **EP 4 715 387 A1**

(12) **EUROPEAN PATENT APPLICATION**
published in accordance with Art. 153(4) EPC

(43) Date of publication:
**25.03.2026 Bulletin 2026/13**

(51) International Patent Classification (IPC):
**G01N 35/02** (2006.01)   **G01N 21/27** (2006.01)

(21) Application number: **24807000.5**

(52) Cooperative Patent Classification (CPC):
**G01N 21/27; G01N 35/02**

(22) Date of filing: **23.04.2024**

(86) International application number:
**PCT/JP2024/015956**

(87) International publication number:
**WO 2024/237046 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.05.2023 JP 2023080740**

(71) Applicant: **HITACHI HIGH-TECH CORPORATION
Tokyo 105-6409 (JP)**

(72) Inventors:
• **ONISHI, Fujio
Tokyo 105-6409 (JP)**
• **SUZUKI, Yoichiro
Tokyo 105-6409 (JP)**
• **YOSHIDA, Gorou
Tokyo 105-6409 (JP)**
• **SUZUKI, Kosuke
Tokyo 105-6409 (JP)**
• **SUGAWARA, Yuki
Tokyo 105-6409 (JP)**

(74) Representative: **Strehl & Partner mbB
Maximilianstrasse 54
80538 München (DE)**

(54) **AUTOMATIC ANALYSIS DEVICE AND TIMING SETTING METHOD**

(57)    In order to provide an automatic analyzer capable of improving the measurement stability, the following configuration is adopted. A control unit acquires a photometric waveform for each of a plurality of reaction cells held on a reaction disk from a photometry signal based on a photometry trigger signal, and sets a photometric value calculation period based on a time domain, the photometry signal being obtained by executing photometry of the plurality of reaction cells in an empty state or in a state where blank water is accommodated, the photometry trigger signal representing that each of the plurality of reaction cells crosses an optical axis of a light source, and the time domain representing a flat waveform obtained regarding the photometric waveform for each of the plurality of reaction cells .

[FIG. 5]

```
                                              ┌─ S01
┌──────────────────────────────────┐        │
│ EXECUTE PHOTOMETERY OF REACTION  │───────┘
│ CELL ON REACTION DISK            │
└──────────────────────────────────┘
                 │
                 ▼
                                              ┌─ S02
┌──────────────────────────────────┐        │
│ ACQUIRE PHOTOMETRY START AVAILABLE│───────┘
│ TIME t_st AND PHOTOMETRY AVAILABLE│
│ PERIOD t FROM PHOTOMETRIC WAVEFORM│
│ FOR EACH REACTION CELL           │
└──────────────────────────────────┘
                 │
                 ▼
                                              ┌─ S03
┌──────────────────────────────────┐        │
│ ACQUIRE CORRECTION TIME t_cal_st │───────┘
└──────────────────────────────────┘
```

EP 4 715 387 A1

**Description**

Technical Field

The present invention relates to an automatic analyzer and a timing setting method thereof.

Background Art

An automatic analyzer executes quantitative analysis of a material to be tested by mixing the material to be tested in a sample such as blood, urine, or body fluid and a reagent corresponding to the material to be tested with each other, irradiating the formed reactant with light, and measuring an absorbance, a turbidity, a reflectance, or the like. A plurality of reaction cells where the sample and the reagent are mixed are measured within a short period of time by placing the reaction cells on a disk-shaped reaction disk and rotating the reaction disk. Therefore, a waveform portion including information regarding the reaction liquid obtained by mixing the sample and the reagent needs to be extracted from a continuous waveform obtained by measuring the plurality of reaction cells.

Examples of a technique of optimizing a photometry timing include PTLs 1 to 3. PTL 1 discloses a technique where, in a state where a reaction cell is filled with water, photometry is repeatedly executed while changing a photometry timing at a small time interval, and a photometry timing at which a variation width of photometric values in all of the reaction cells is small is determined as an optimum photometry timing. PTL 2 discloses a technique of calculating an optimum photometry available region for each reaction container. Specifically, in the technique disclosed in PTL 2, in a waveform, a point that is 1/2 of a time difference of a timing at which light passes through a side surface of a reaction container or a time difference of a timing at which light passes through a portion that is a cavity between reaction containers is set as a central value of the reaction containers, and the optimum photometry available region for each reaction container is determined based on the central value. Further, PTL 3 discloses a technique of correcting a photometry start timing or a photometry end timing for rotation unevenness of a reaction disk.

Citation List

Patent Literature

PTL 1: JPH6-167505A
PTL 2: JP2009-162719A
PTL 3: JP2009-162720A

Summary of Invention

Technical Problem

In PTL 1, photometry is repeatedly executed on the reaction cells filled with water while changing the photometry timing at the small time interval. Therefore, in order to determine the optimum photometry timing, the measurement needs to be executed multiple times, which is troublesome.

On the other hand, in PTL 2, for example, by executing photometry in an empty reaction container state, a photometry timing can be determined based on the photometric waveform. Specifically, for example, the timing at which light passes through the side surface of the reaction container is specified as a change point of the waveform. However, there is a variation in the shape of the waveform depending on each reaction container due to a variation between the shapes of the individual reaction containers, a variation between attachment positions to the reaction disk, or the like. Therefore, the slope of the waveform transitioning from the change point to a flat portion suitable for the photometry of the reaction liquid largely varies depending on each reaction container. There may be a waveform transitioning from the change point to a flat portion with a steep slope, or may be a waveform transitioning from the change point to a flat portion with a gentle slope. Therefore, in the method disclosed in PTL 2 in which the photometry available region is determined based on the central value of the reaction containers, the photometry available region needs to be determined such that the photometry available region is fitted into the flat portion even for the waveform with a gentle slope, and it is difficult to extend the length of the photometry available region.

Solution to Problem

According to one embodiment of the present invention, there is provided an automatic analyzer including: a reaction disk where a plurality of reaction cells are held on a circumference and configured to execute a rotation operation; a light source configured to emit light; a spectroscopic analyzer configured to detect transmitted light that transmits through a reaction cell crossing an optical axis of the light source when the reaction disk executes the rotation operation; and a control unit including a photometry unit configured to extract, from a photometric waveform, a photometric waveform of a photometric value calculation period used for calculating a light intensity value regarding a liquid accommodated in the reaction cell, the photometric waveform being obtained by sampling a photometry signal that reflects a light intensity value of the transmitted light output from the spectroscopic analyzer, in which the control unit acquires a photometric waveform for each of the plurality of reaction cells held on the reaction disk from a photometry signal based on a photometry trigger signal, and sets the photometric value calculation period based on a time domain representing a flat waveform, the photometry signal being obtained by executing photometry of the plurality of reaction cells in an empty state or in a state where blank water is accommodated, the photometry trigger signal representing that each of the plurality of reaction cells crosses the optical axis of the light source, and the time domain being obtained regarding the photometric waveform for each of the plurality of reaction cells.

Advantageous Effects of Invention

According to the present invention, a photometric value of a reaction liquid can be calculated using a photometric value in a time domain representing a flat waveform of a reaction cell acquired before allowing an automatic analyzer to execute a specimen test, and the measurement stability of the device can be improved. Other objects and new characteristics will be clarified with reference to description of the present specification and the accompanying drawings.

Brief Description of Drawings

[Fig. 1] Fig. 1 is a diagram illustrating an overall configuration of an automatic analyzer.
[Fig. 2] Fig. 2 is a schematic diagram illustrating the summary of a position detection unit.
[Fig. 3A] Fig. 3A is a diagram illustrating a photometry method of a reaction liquid in a reaction cell.
[Fig. 3B] Fig. 3B is a diagram illustrating the photometry method of the reaction liquid in the reaction cell.
[Fig. 4] Fig. 4 is a diagram illustrating photometric waveforms that are arranged for respective reaction cells with reference to rising of a photometry trigger signal T.
[Fig. 5] Fig. 5 is a flow of calculating a correction time $t_{cal\_}$st.
[Fig. 6] Fig. 6 is a diagram illustrating a first example of calculating the correction time $t_{cal\_}$st.
[Fig. 7] Fig. 7 is a diagram illustrating an example of extracting a photometric waveform of a photometric value calculation period $t_{cal}$ for each reaction cell.
[Fig. 8] Fig. 8 is a diagram illustrating a modification example of a second example of calculating the correction time $t_{cal\_}$st.
[Fig. 9] Fig. 9 is a diagram illustrating a third example of calculating the correction time $t_{cal\_}$st.
[Fig. 10A] Fig. 10A is an example of a correction time storage memory in the third example.
[Fig. 10B] Fig. 10B is an example of a photometric value calculation period storage memory in the third example.
[Fig. 11] Fig. 11 is a diagram illustrating abnormal waveform determination such as foreign matter, a bubble, or a scratch.
[Fig. 12] Fig. 12 is a diagram illustrating estimation of a foreign matter width.
[Fig. 13] Fig. 13 is a diagram illustrating self-diagnosis of a light flux width.
[Fig. 14] Fig. 14 is a diagram illustrating detection of a stirring failure or an insufficient liquid amount in a reaction liquid.

Description of Embodiments

Hereinafter, embodiments will be described with reference to the drawings.

First Embodiment

A configuration and an operation of an automatic analyzer will be described by using, as an example, an automatic analyzer 100 that executes colorimetric analysis using a biochemical reaction.

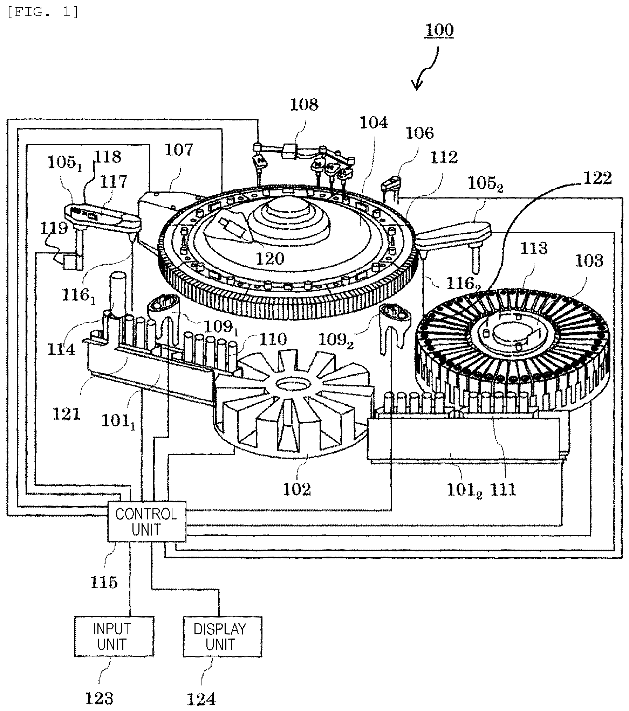

Fig. 1 illustrates an overall configuration of the automatic analyzer 100. Here, an automatic analyzer that executes colorimetric analysis using a biochemical reaction will be described as an example. The automatic analyzer 100 is configured to include a transport line 101, a rotor 102, a reagent disk 103, a reaction disk 104, an aliquoting mechanism 105, a stirring mechanism 106, a spectroscopic analyzer 107, a reaction cell cleaning mechanism 108, a nozzle cleaning mechanism 109, a control unit 115, an input unit 123, and a display unit 124. When a plurality of certain mechanisms are distinguished from each other for description, suffixes are added to distinguish between the mechanisms.

A transport line $101_1$ transports a specimen rack 111 that holds specimen containers 110 containing a specimen to a specimen aliquoting position 121. An aliquoting mechanism (specimen aliquoting mechanism) $105_1$ aliquots the specimen from the specimen container 110 into a reaction cell (reaction container) 112 on the reaction disk 104 at the specimen aliquoting position 121. The transport line $101_1$ is further connected to the rotor 102. By placing the specimen rack 111 on the rotor 102 and rotating the rotor 102, the specimen rack 111 is transported to another transport line $101_2$.

The reagent disk 103 holds reagent containers 113 containing a reagent and rotates and transports each of the reagent containers 113 to a position where an aliquoting mechanism (reagent aliquoting mechanism) $105_2$ can execute an aliquoting operation. The aliquoting mechanism $105_2$ aliquots the reagent from the reagent container 113 to the reaction cell 112 on the reaction disk 104 at a reagent aliquoting position 122. A necessary amount of the reagent for the colorimetric analysis is aliquoted into the reaction cell 112 and reacts with a component as an analysis target in the specimen.

The reaction disk 104 holds the reaction cells 112 on the circumference thereof. In the vicinity of the reaction disk 104, the spectroscopic analyzer 107 that executes colorimetric analysis, the stirring mechanism 106, the reaction cell cleaning mechanism 108, and the like are disposed, and the reaction cells 112 that are targets of the operations of the units are rotated and transported to operation positions as positions where the units operate, respectively. The reaction cell 112 is kept warm by a constant-temperature medium such as water. As a result, in a reaction liquid that is a mixture of the specimen and the reagent, a chemical reaction of the component in the specimen and the reagent is promoted.

The aliquoting mechanism $105_1$ aspirates the specimen for the colorimetric analysis from the specimen container 110 and discharges the specimen to the reaction cell 112. The aliquoting mechanism $105_2$ aspirates the reagent corresponding to the analysis target from the reagent container 113, and discharges the reagent to the reaction cell 112. Each of the aliquoting mechanisms 105 ($105_1$ to $105_2$) includes an arm 118, a nozzle 116, and a motor 119 for aliquoting mechanism. The arm 118 holds the nozzle 116 and a liquid level sensor 117. The nozzle 116 is connected to the liquid level sensor 117. The liquid level sensor 117 detects whether or not liquid is present using a change in capacitance. In the vicinity of the position where the aliquoting mechanism 105 executes the aliquoting operation, a shield portion 114 is provided. The motor 119 for aliquoting mechanism moves the aliquoting mechanism 105 in an up-down direction or in a rotation direction.

The stirring mechanism 106 stirs the reaction liquid in the reaction cell 112 to promote the reaction of the analysis target component in the specimen discharged from the specimen container 110 into the reaction cell 112 and the reagent discharged from the reagent container 113 into the reaction cell 112.

A light source 120 emits output light to the reaction liquid that is stirred by the stirring mechanism 106 such that the chemical reaction occurs. As the light source 120, for example, a LED (Light Emitting Diode) is used. The spectroscopic analyzer 107 disperses transmitted light that transmits through the reaction liquid in the reaction cell 112, and measures a light intensity of the dispersed transmitted light. The colorimetric analysis is executed by absorbance measurement based on the light intensity of the dispersed transmitted light.

The reaction cell cleaning mechanism 108 aspirates the reaction liquid from the reaction cell 112 after completion of the colorimetric analysis, and discharges a cleaner or the like into the reaction cell 112 to clean the reaction cell 112.

The nozzle cleaning mechanisms 109 ($109_1$ and $109_2$) clean tips of the nozzles 116 of the aliquoting mechanisms 105 ($105_1$ and $105_2$) that have aliquoted the specimen or the reagent, respectively. As a result, residues attached to the nozzle 116 are removed and do not affect the next analysis target.

The control unit 115 is configured with a processor, a memory, and the like and controls each of the mechanisms. The input unit 123 is configured with a keyboard, a mouse, a touch panel, and the like and inputs an instruction from a user to the control unit 115. The display unit 124 is configured with a LCD (Liquid Crystal Display) or the like, and displays an operation screen or the like.

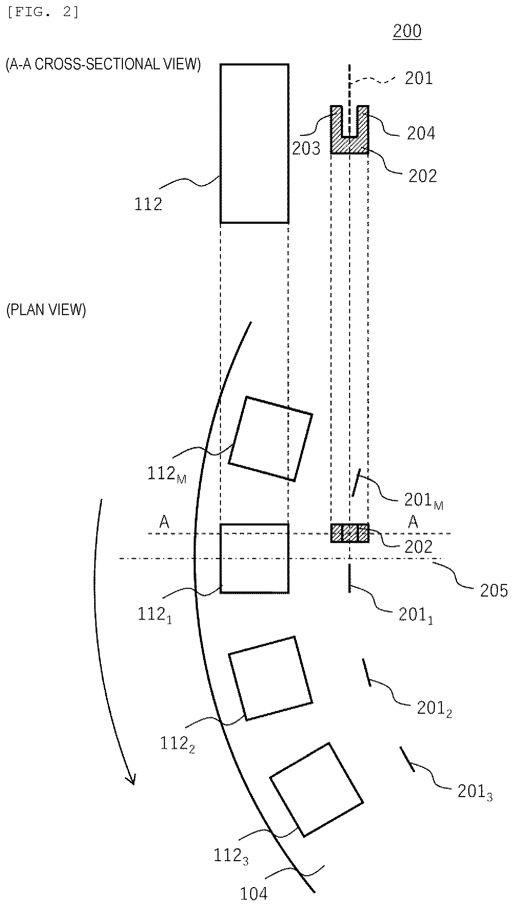

Fig. 2 is a schematic diagram illustrating the summary of a position detection unit provided in the reaction disk 104. A position detection unit 200 includes, for example, a detection plate 201 and a detection plate detector 202. As illustrated in Fig. 2, the detection plates 201 of the same number as that of the reaction cells 112 are provided in the reaction disk 104 to satisfy an one-to-one relationship. In addition, the detection plate detector 202 is provided at a position where a detection plate $201_1$ crossing an optical axis 205 of the light source 120 can be detected. For example, the detection plate detector 202 includes a light emitting unit 203 and a photodetection unit 204, and detects passage of the detection plate 201 when the detection plate 201 passes between the light emitting unit 203 and the photodetection unit 204 to block light from the light emitting unit 203. The position detection unit 200 outputs a detection signal obtained when the detection plate detector 202 detects the passage of the detection plate 201, as a photometry trigger signal representing the passage of the reaction cell 112 between the light source 120 and the spectroscopic analyzer 107.

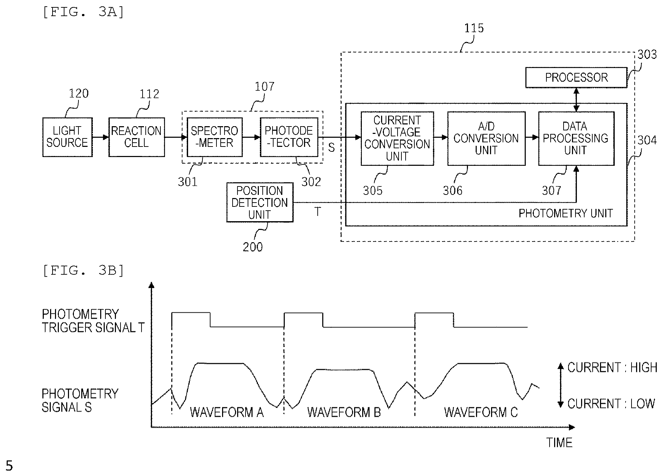

A photometry method of the reaction liquid in the reaction cell 112 in the automatic analyzer 100 will be described using Figs. 3A and 3B. Light is emitted from the light source 120 to the reaction cell 112 accommodating the reaction liquid, and transmitted light transmitting through the reaction cell 112 is incident on the spectroscopic analyzer 107. The spectroscopic analyzer 107 includes a spectrometer 301 and a photodetector 302. The spectrometer 301 separates the transmitted light into a plurality of wavelengths, and the photodetector 302 detects a light intensity value of the transmitted light for each of the separated wavelengths. Specifically, the photodetector 302 outputs a photometry signal S having a current value proportional to the light intensity value of the transmitted light, and the photometry signal S is input to a photometry unit 304 of the control unit 115.

The photometry unit 304 includes a current-voltage conversion unit 305, an A/D conversion unit 306, and a data processing unit 307. The current-voltage conversion unit 305 converts the photometry signal S into a voltage value. The A/D conversion unit 306 samples a photometry voltage value signal that is an analog signal at a predetermined sampling period and converts the sampled signal into a digital signal. The data processing unit 307 generates a photometric waveform representing a change in the light intensity of the transmitted light transmitting through the reaction cell 112 regarding the photometry voltage signal converted into the digital signal. In addition, a photometry trigger signal T is input from the position detection unit 200 to the data processing unit 307.

Fig. 3B schematically illustrates the photometry signal S and the photometry trigger signal T input to the photometry unit 304. It is assumed that photometry of the reaction cell 112 is executed in an empty state or in a state where blank water is filled. The photometry is executed in a state where the reaction disk 104 is rotated. Therefore, the photometric waveform is a continuous waveform that is the same as that of the photometry signal S of Fig. 3B. In the photometric waveform corresponding to one reaction cell 112, the light intensity value is significantly attenuated when the optical axis 205 of the light source 120 passes through a side wall of the reaction cell 112. Accordingly, a photometric waveform in a period interposed between the attenuated portions includes information regarding the transmitted light of the reaction liquid accommodated in the reaction cell 112. Therefore, the data processing unit 307 extracts a photometric waveform of a predetermined photometric value calculation period $t_{cal}$. The photometric value calculation period $t_{cal}$ is a period used for calculating the light intensity value regarding the reaction liquid accommodated in the reaction cell 112. The data processing unit 307 calculates the light intensity value of the transmitted light of the reaction liquid based on the extracted photometric waveform. The calculated light intensity value is transmitted to a processor 303 of the control unit 115, and the analysis of the reaction liquid is executed.

Although not illustrated in Fig. 3A, the photometry signal S of the transmitted light for each of the separated wavelengths is input from the photodetector 302 to the photometry unit 304. The processes to be executed by the current-voltage conversion unit 305, the A/D conversion unit 306, and the data processing unit 307 described above regarding the photometric waveform for each of the separated wavelengths are executed in parallel.

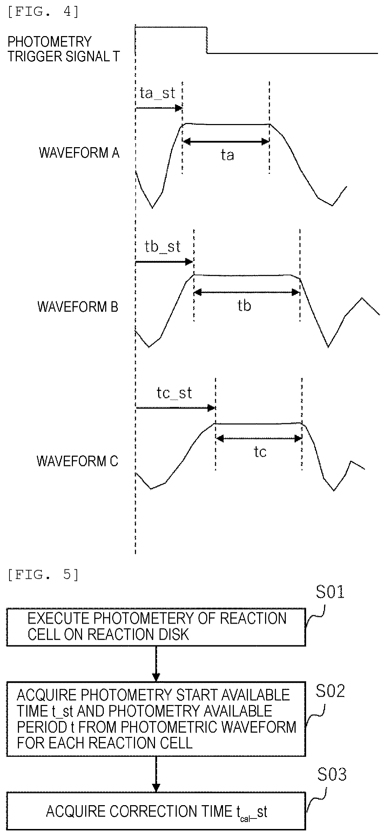

Fig. 4 illustrates the photometric waveforms corresponding to the photometry signal S illustrated in Fig. 3B, arranged for the respective reaction cells with reference to rising of the photometry trigger signal T. In the photometric waveform for each of the reaction cells, a time period that is a flat waveform where a difference between the values at adjacent sampling positions is a certain value or less is assumed as a photometry available period t, and a period from the rising of the photometry trigger signal T to the start of the photometry available period t is assumed as a photometry start available time t_st. When the photometry available period t is acquired, it is desirable to acquire the photometry available period t after removing a change caused by noise or the like. This way, a photometry start available time ta_st and a photometry available period ta in a waveform A (photometric waveform of a reaction cell A), a photometry start available time tb_st and a photometry available period tb in a waveform B (photometric waveform of a reaction cell B), and a photometry start available time tc_st and a photometry available period tc in a waveform C (photometric waveform of a reaction cell C) vary, respectively. The reason for the variation is a variation in the container shape, a variation in the attachment position to the reaction disk, or scattered light from an adjacent container. In the present embodiment, the photometry available period t and the photometry start available time t_st are obtained for the photometric waveform for each of the reaction cells that has a large variation, and a timing at which the extraction of the photometric waveform used for calculating the light intensity value for the reaction liquid starts from the rising of the photometry trigger signal T, that is, a start timing of the photometric value calculation period $t_{cal}$ is determined. Hereinafter, a period of time from the rising of the photometry trigger signal T to the start timing of the photometric value calculation period $t_{cal}$ will be referred to as a correction time $t_{cal}$_st.

Fig. 5 illustrates a flow of calculating the correction time $t_{cal}$_st in the present embodiment. The photometric value calculation period $t_{cal}$ is predetermined as a period common to the reaction cells 112 on the reaction disk 104. This flow is executed by the control unit 115.

First, photometry of the reaction cells 112 on the reaction disk 104 is executed (S01). The reaction cell 112 may be in an empty state or in a state where blank water is accommodated. In addition, this flow is executed when the replacement of the reaction cell or the like is executed, but the present invention is not limited thereto. The flow may be executed at any timing.

Next, the photometry start available time t_st and the photometry available period t illustrated in Fig. 4 are acquired from the photometric waveform for each of the reaction cells (S02). The correction time $t_{cal}$_st is acquired based on the photometry start available times t_st and the photometry available periods t of the reaction cells 112 on the reaction disk 104 acquired in Step S02 (S03). The acquired correction time $t_{cal\_st}$ is stored in the control unit 115, and is used for extracting the photometric waveform of the photometric value calculation period $t_{cal}$ in the data processing unit 307. Hereinafter, a calculation example of the correction time $t_{cal\_st}$ in Step S03 will be described.

(First Example of Calculating Correction Time $t_{cal\_st}$)

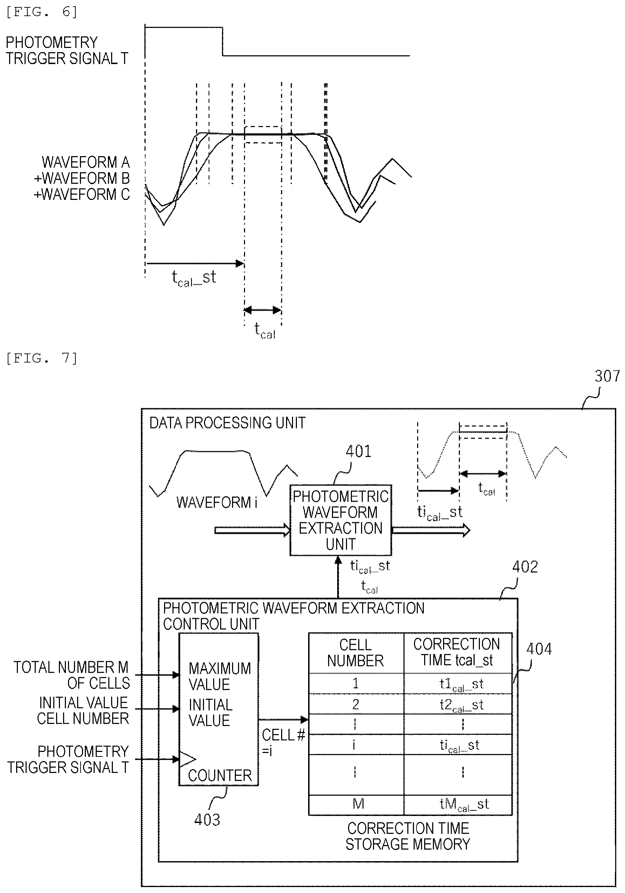

In a first example, the correction time $t_{cal\_st}$ common to the reaction cells 112 on the reaction disk 104 is calculated. In Fig. 6, the waveforms A to C illustrated in Fig. 4 are illustrated to overlap each other, and a relationship between the correction time $t_{cal\_st}$ and the photometric value calculation period $t_{cal}$ is illustrated. That is, the correction time $t_{cal\_st}$ is set such that the photometric value calculation period $t_{cal}$ is included in the photometry available periods t of the photometric waveforms corresponding to the reaction cells on the reaction disk 104. For example, assuming that the maximum value among the photometry start available times t_st of the reaction cells on the reaction disk 104 is a latest photometry start available time t_st_max, the correction time $t_{cal\_st}$ is set to satisfy the following relationship.

$$\text{Correction Time } t_{cal\_st} > \text{Latest Photometry Start Available Time t\_st\_max}$$

In the first example, by setting the correction time $t_{cal\_st}$ common to the reaction cells 112 on the reaction disk 104, the extraction process of the photometric waveform of the photometric value calculation period $t_{cal}$ in the data processing unit 307 can be simplified. In addition, since the correction time $t_{cal\_st}$ is acquired from the actual waveforms, the photometric value calculation period $t_{cal}$ can be increased as long as possible. However, the possible photometric value calculation period $t_{cal}$ is unavoidably limited to the size of the variation of the reaction cells 112. As a second example, an example of setting the correction time $t_{cal\_st}$ for each of the reaction cells 112 on the reaction disk 104 will be described.

(Second Example of Calculating Correction Time $t_{cal\_st}$)

In the second example, the correction time $t_{cal\_st}$ is set for each of the reaction cells 112 on the reaction disk 104. That is, for each of the reaction cells, the correction time $t_{cal\_st}$ is set to satisfy the following relationship.

Correction Time $t_{cal\_st}$ > Photometry Start Available Time t_st As a result, the photometric value calculation period $t_{cal}$ can be increased from the photometric waveforms corresponding to the reaction cells without being limited to the variation of the reaction cells 112 on the reaction disk 104. The increase in the photometric value calculation period $t_{cal}$ is effective in that, for example, even when a region that is affected by a bubble is partially present during measurement of a specimen, there is a high possibility that a sufficient photometric waveform can be obtained even after excluding the region affected by a bubble, and the number of cases where remeasurement is required can be reduced.

Using Fig. 7, an example of the data processing unit 307 extracts the photometric waveform of the photometric value calculation period $t_{cal}$ for each of the reaction cells will be described. The data processing unit 307 includes a photometric waveform extraction unit 401 and a photometric waveform extraction control unit 402 as functional units for extracting the photometric waveform. In addition, the photometric waveform extraction control unit 402 includes a counter 403 and a correction time storage memory 404. The data processing unit 307 can be configured with a processor that executes a program. In this case, the processor operates as a functional unit for executing a predetermined function by executing a predetermined program.

Here, M reaction cells 112 are mounted on the reaction disk 104, and a number (cell number) for uniquely specifying a mounting position is set for each of mounting positions of the reaction cells 112. To the counter 403, the number (total cell number) M of the reaction cells mounted on the reaction disk 104, and a cell number (initial value cell number) and the photometry trigger signal T of the reaction cell 112 initially crossing the optical axis 205 of the light source 120 when the reaction disk 104 starts to rotate are input from the processor 303. The counter 403 outputs, as the cell number, a value obtained by adding 1 to the initial value cell number whenever the photometry trigger signal T is input. When the cell number reaches the total cell number M, the cell number is reset to 1 at a timing at which the next photometry trigger signal T is input. The correction time storage memory 404 stores the correction time $t_{cal\_st}$ for each of the reaction cells 112 specified by the cell numbers.

When a photometric waveform i corresponding to a reaction cell with a cell number i is input to the photometric waveform extraction unit 401, the correction time $t_{cal\_st}$ and the photometric value calculation period $t_{cal}$ of the cell number i are input from the photometric waveform extraction control unit 402 to the photometric waveform extraction unit 401. Using these information, the photometric waveform extraction unit 401 extracts the photometric waveform of the photometric value calculation period $t_{cal}$ of the reaction cell with the cell number i.

(Modification Example of Second Example of Calculating Correction Time $t_{cal\_}$st)

When the correction time $t_{cal\_}$st is set for each of the reaction cells 112 on the reaction disk 104, the correction time $t_{cal\_}$st and the photometric value calculation period $t_{cal}$ can be set according to the waveform of the photometry available period t of the photometric waveform of the reaction cell 112.

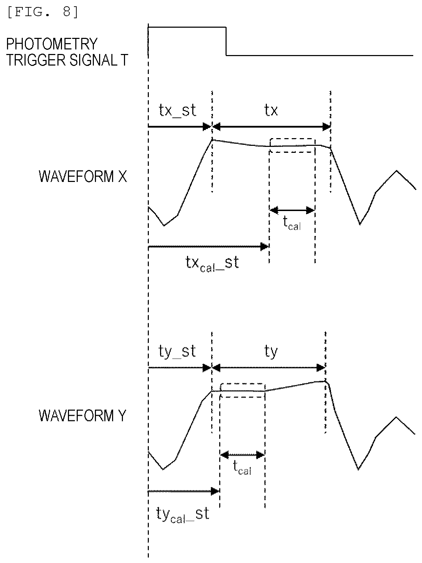

In the case of a waveform X illustrated in Fig. 8, in the waveform of the photometry available period t, the latter half is substantially 0, whereas the first half is gentle but has a slope. Likewise, in the case of a waveform Y illustrated in Fig. 8, in the waveform of the photometry available period t, the first half is substantially 0, whereas the latter half is gentle but has a slope. In this case, it is desirable to set the correction time such that the waveform where the slope in the waveform of the photometry available period t is substantially 0 can be extracted.

In this case, in the case of the waveform X, the correction time is set such that the photometric value calculation period is set in the latter half of the waveform of the photometry available period t, and in the case of the waveform Y, the correction time is set such that the photometric value calculation period is set in the first half of the waveform of the photometry available period t.

(Third Example of Calculating Correction Time $t_{cal\_}$st)

In the third example, the correction time $t_{cal\_}$st and the photometric value calculation period $t_{cal}$ can be set according to a rotational speed of the reaction disk 104. Here, as in the second example, an example of setting the correction time $t_{cal\_}$st and the photometric value calculation period $t_{cal}$ for each of the reaction cells 112 on the reaction disk 104 will be described.

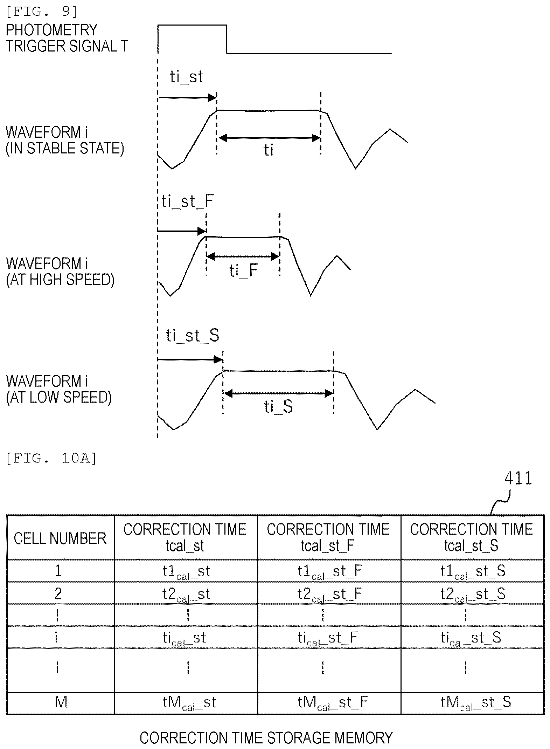

The reaction disk 104 executes the rotation operation at a certain speed. When the rotation starts and when the rotation is stopped, the reaction disk 104 moves at a higher speed than the certain speed and moves at a lower speed than the certain speed, respectively. Therefore, a photometric waveform of the reaction cell 112 crossing the optical axis 205 immediately after the start of the rotation operation of the reaction disk 104 and a photometric waveform of the reaction cell 112 crossing the optical axis 205 immediately before the stop of the rotation operation of the reaction disk 104 are different from a photometric waveform of the reaction cell 112 crossing the optical axis 205 when the reaction disk 104 rotates at the certain speed. Fig. 9 illustrates this state. As compared to the waveform in the stable state, each of the photometry start available time t_st and the photometry available period t decreases at the high speed, and increases at the low speed.

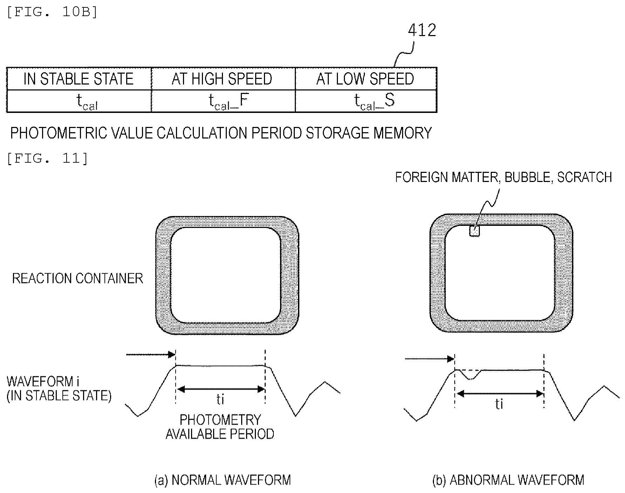

Accordingly, in the third example, the photometry start available time t_st and the photometry available period t are adjusted according to the rotational speed of the reaction disk 104. Therefore, the photometric waveform extraction control unit 402 includes a correction time storage memory 411 illustrated in Fig. 10A and a photometric value calculation period storage memory 412 illustrated in Fig. 10B. As a result, when the photometric waveform where the extraction process is executed is the photometric waveform where the reaction disk 104 executes the high-speed operation immediately after the rotation start, the extraction process is executed using a correction time at the high speed (correction time $t_{cal\_}$st_F) and a photometric value calculation period at the high speed (photometric value calculation period $t_{cal\_}$F), and when the photometric waveform where the extraction process is executed is the photometric waveform where the reaction disk 104 executes the low-speed operation immediately before the rotation stop, the extraction process is executed using a correction time at the low speed (correction time $t_{cal\_}$st_S) and a photometric value calculation period at the low speed (photometric value calculation period $t_{cal\_}$S). Whether the rotational speed of the reaction disk 104 is the speed in the stable state, the low speed, or the high speed can be determined depending on the cell number.

Here, the example of setting the correction time $t_{cal\_}$st and the photometric value calculation period $t_{cal}$ for each of the reaction cells 112 has been described. However, even when the correction time $t_{cal\_}$st common to the reaction disk 104 is set, the correction time $t_{cal\_}$st and the photometric value calculation period $t_{cal}$ can be set using the same method.

The present invention is not limited to the embodiments described above and includes various modification examples. For example, the embodiments and the modification example have been described in detail in order to easily describe the present invention, and the present invention is not necessarily to include all the configurations described above. In addition, a part of the configuration of one embodiment or modification example can be replaced with the configuration of another embodiment or modification example. Further the configuration of one embodiment or modification example can be added to the configuration of another embodiment or modification example. In addition, addition, deletion, and replacement of another configuration can be made for a part of the configuration of each of the embodiment and modification examples.

Second Embodiment

The first embodiment is characterized in that the photometry start available time, the photometry available period, and the like are determined based on the photometric waveform. However, in a second embodiment, an example where the photometric waveform is applied to a case other than the determination of the photometry start available time, the photometry available period, and the like will be described.
(a) of Fig. 11 illustrates a photometric waveform in a state where the reaction container is filled with a uniform liquid. It can be seen that a photometry output that is symmetrical with respect to the central axis of the reaction container is obtained. On the other hand, (b) illustrates a photometric waveform when foreign matter such as a bubble or a scratch is present in the reaction container. It can be seen that, since light from the light source is scattered by the foreign matter, the photometric intensity decreases in the vicinity of the foreign matter. Using this phenomenon, it can be detected that the foreign matter is present in the reaction container.

In addition, although not illustrated in the drawing, the way of light scattering varies between a scratch and a bubble. Therefore, by skipping (cell skipping) a reaction container (reaction cell) for which it is determined that a scratch is present to prevent this reaction container from being used in the subsequent analysis, the reliability of the measurement result can be improved. Alternatively, by notifying a device operator that there is a reaction container that needs to be replaced, the replacement of the reaction container is urged, and highly reliable analysis can be executed.

In addition, when it is determined that the liquid (reaction liquid) in the reaction container contains many bubbles, assuming that the viscosity of a specimen to be analyzed is high such that bubbles are likely to be formed or that there is possibility that a normal analysis result cannot be obtained due to a problem in the reagent such as deterioration of the reagent, it is effective to allocate an alarm representing the problem to the analysis result, or to leave a comment to urge the device operator for re-analysis. In order to make the above-described determination, it is preferable that reference data for identifying a reaction container where a scratch or a bubble is present is generated and stored based on a photometric waveform measured using a reaction container that is artificially scratched or a reaction container where a bubble is caused to be formed, and the reference data and an actual photometric waveform are compared to determine whether or not a scratch or a bubble is present.

In the determination, a threshold may be provided in the photometric waveform such that, when the photometric waveform falls by the threshold or more, it is determined that a scratch or a bubble is present. In order to further increase the determination accuracy, a well-known statistical method such as the Mahalanobis distance can also be used. That is, for example, the Mahalanobis distance is obtained based on a normal photometric waveform to obtain a threshold of a normal space, and when the photometric waveform exceeds the threshold, it is determined that an abnormality occurs.

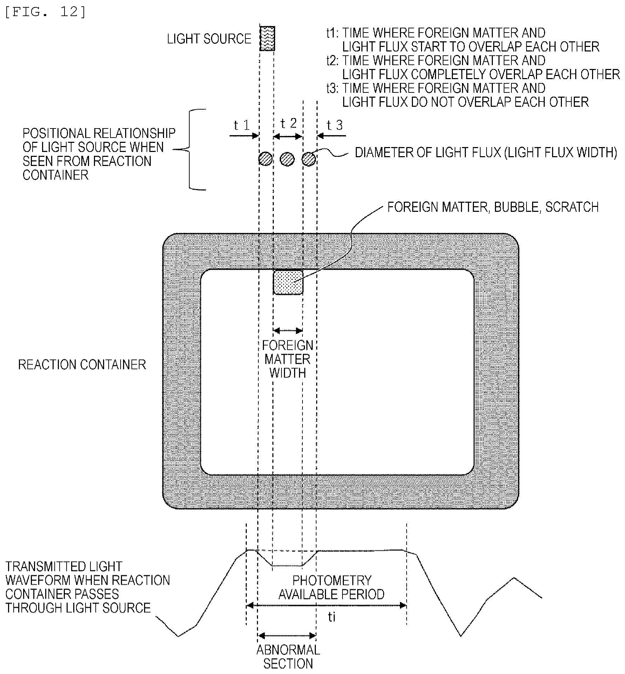

Fig. 12 illustrates an embodiment where the size of foreign matter is estimated based on the diameter of a light flux of light from the light source.

In Fig. 12, a time where the foreign matter and the light flux starts to overlap each other is represented by t1, a time where the foreign matter and the light flux completely overlap each other is represented by t2, and a time where the foreign matter and the light flux do not overlap each other is represented by t3.

An abnormal section where the photometric waveform is abnormal = the width of the foreign matter + (the width of the light flux $\times$ 2). Therefore, based on this expression, the width (size) of the foreign matter can be obtained.

As a result, for example, when the measured foreign matter is a scratch and the size thereof is a predetermined value or more, by notifying the device operator that the replacement of the reaction container is necessary, the use of the reaction container for the specimen measurement and analysis that cannot be used for result report can be avoided. In addition, when the size of the bubble is a predetermined value or more, by notifying the device operator that analysis using the specimen or reagent is to be stopped, the specimen or reagent can be prevented from being unnecessarily used.

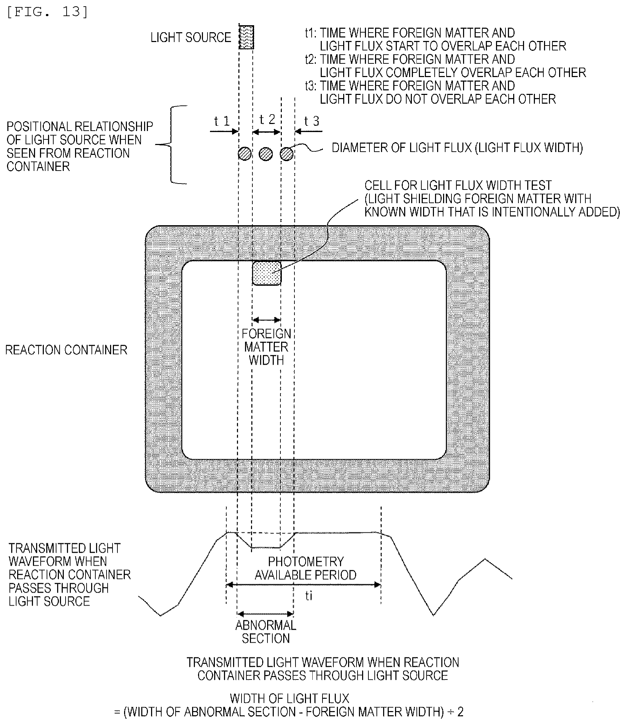

Fig. 13 illustrates an example where the diameter of a light flux can be obtained by adding foreign matter with a known size (object that can shield the light flux) to the reaction container contrary to Fig. 12. Light from the light source is designed such that an optical path is bent by a reflecting mirror, a slit or the like is provided to obtain a predetermined light flux width, and the light transmits through the reaction container.

When an abnormality occurs in this optical system due to some reason, the width of the light flux may change. However, the automatic analyzer only measures a change in absorbance to automatically analyze the reaction based on this change. Therefore, even when the width of the light flux changes, the occurrence of the abnormality cannot be detected. That is, there is a possibility that an erroneous analysis result may be reported. By regularly observing (inspecting) the diameter of the light flux, the occurrence of abnormality in the optical system can be detected.

In addition, recently, an automatic analyzer where a light-emitting diode (LED) is used as a light source instead of a halogen lamp in the related art has appeared. The light-emitting diode produces white light. Therefore, an optical system where white light produced by emitting light of an LED that emits blue light to a fluorescent substance is combined with light from a light-emitting diode that emits ultraviolet light to synthesize irradiation light may be used. When a light source including this complex optical system is used, the possibility that the direction of the LED changes to change the direction of the irradiation light is not zero. Even in this case, by regularly monitoring the diameter of the light flux, the occurrence of an abnormality in the light source can be detected.

When the width of the light flux exceeds a predetermined threshold, the occurrence of an abnormality may be notified. A change over time in the measured width of the light flux may also be recorded in advance such that a period of time required to exceed a predetermined threshold assuming that the automatic analyzer is used as it is can be predicted based on the change over time and can be notified.

Fig. 13 illustrates the example where the light shielding foreign matter with a known width is provided on an inner surface of the reaction container. However, the thickness of the container wall of the reaction container can also be considered the light shielding foreign matter with a known width. The thickness of the container wall of the reaction container slightly varies between the reaction containers. Therefore, one or a plurality of reaction containers are set as reaction containers for checking the diameter of the light flux, and the change over time in the diameter of the light flux is measured based on the shape of the transmitted light waveform depending on the thickness of the container wall.

In the method where the container wall is considered foreign matter, the length of the container wall (the length in the vertical direction in Fig. 13) is long. Therefore, the attenuation amount of the transmitted light is large, and there is a possibility that the detection sensitivity is lower as compared to the method where the foreign matter with a known width is provided. However, there is an advantageous effect in that the reaction container where foreign matter is provided does not need to be separately prepared.

As another method, a method in which a clearance between one reaction container and another reaction container is considered foreign matter can also be used. In some automatic analyzer, a reaction container where a plurality of reaction containers are formed as one block is present. In the case of the block-shaped reaction container, the distance of the clearance between adjacent reaction containers is constant. Therefore, the clearance can be considered foreign matter. As compared to the case where the container wall is considered foreign matter, the light intensity is higher. Therefore, the diameter of the light flux can be measured with higher accuracy.

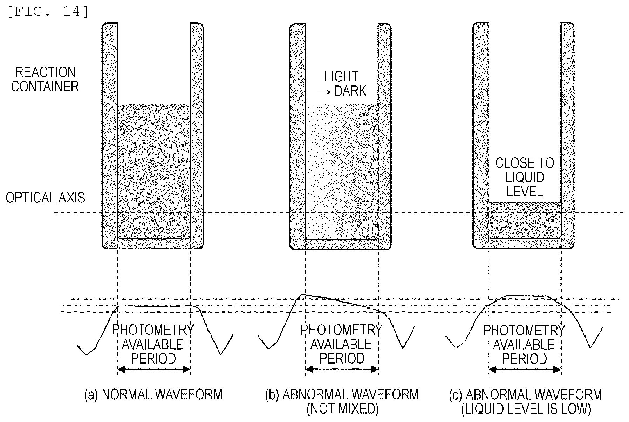

Fig. 14 illustrates an example where the state of the liquid in the reaction container is detected based on the photometric waveform. The measurement result is calculated based on a change in absorbance that is measured using a photometer in a state where the specimen and the reagent in the reaction container are mixed and stirred to cause the reaction to sufficiently occur. However, even in this case, the possibility that the measurement is executed in a state where stirring is not sufficient due to occurrence of some malfunction in the stirring mechanism is not zero.

The stirring device has various abnormality detection functions to detect an abnormality of the stirring device. However, there may be a case where occurrence of an abnormality that is lower than or equal to the abnormality detection sensitivity cannot be detected. Even in this case, in the present embodiment, a stirring abnormality can be detected based on the output of the photometer.

(a) of Fig. 14 illustrates a photometric waveform where a normal reaction liquid is used. The photometric waveform is symmetrical with respect to the central axis of the reaction container. On the other hand, when the concentration of the reaction liquid is low on the left side of the reaction container (that is, bright because light is likely to transmit through the reaction container) and is high on the right side (that is, dark because light is not likely to transmit through the reaction container) due to some reason such as insufficient stirring, an asymmetrical photometric waveform where the light intensity is high on the left side and is low on the right side is obtained. This way, the mixing condition of the reaction liquid in the reaction container can be determined based on the symmetry of the photometric waveform.

As the determination method, various methods such as a method of determining that a mixing failure occurs when a difference between left and right peak values of the photometric waveform exceeds a predetermined threshold or a determination method based on the slope of the photometric waveform (in (b) of Fig. 14, the detection height of the photometer monotonously decreases from the left side to the right side) can be used.

In addition, the optical axis is set such that the light flux from the light source passes through a possible lowest position of the reaction container where at least the measurement of the reaction liquid in the reaction container can be executed. However, when the amount of the reaction liquid in the reaction container decreases as the position of the optical axis, there may be a case where an appropriate measurement result cannot be obtained. (c) of Fig. 14 illustrates a photometric waveform where the liquid level of the reaction liquid is close to the optical axis. It can be seen that the photometric waveform is not smooth and has an upwardly convex shape. This way, even when the photometric waveform is symmetrical but has a slope in the left-right direction, an alarm may be allocated to the analysis result assuming that there is a possibility that the liquid amount is small and an appropriate measurement result cannot be obtained.

In addition, the automatic analyzer recognizes the amount of the reaction liquid for each analysis item. Therefore, it can be seen based on the actually measured photometric waveform that, when it is detected that the amount of the reaction liquid is small with respect to the set amount of reaction liquid, there is a possibility that any abnormality occurs in an aliquoting probe of a specimen or reagent. That is, an abnormality in the aliquoting probe can be detected by determining whether or not the actual liquid amount is insufficient with respect to the liquid amount stored in the automatic analyzer based on the photometric waveform.

**EP 4 715 387 A1**

Reference Signs List

100: automatic analyzer
101: transport line
102: rotor
103: reagent disk
104: reaction disk
105: aliquoting mechanism
106: stirring mechanism
107: spectroscopic analyzer
108: reaction cell cleaning mechanism
109: nozzle cleaning mechanism
110: specimen container
111: specimen rack
112: reaction cell
113: reagent container
114: shield portion
115: control unit
116: nozzle
117: liquid level sensor
118: arm
119: motor for aliquoting mechanism
120: light source
121: specimen aliquoting position
122: reagent aliquoting position
123: input unit
124: display unit
200: position detection unit
201: detection plate
202: detection plate detector
203: light emitting unit
204: photodetection unit
205: optical axis
301: spectrometer
302: photodetector
303: processor
304: photometry unit
305: current-voltage conversion unit
306: A/D conversion unit
307: data processing unit
401: photometric waveform extraction unit
402: photometric waveform extraction control unit
403: counter
404, 411: correction time storage memory
412: photometric value calculation period storage memory

**Claims**

1. An automatic analyzer comprising:

   a reaction disk where a plurality of reaction cells are held on a circumference and configured to execute a rotation operation;
   a light source configured to emit light;
   a spectroscopic analyzer configured to detect transmitted light that transmits through a reaction cell crossing an optical axis of the light source when the reaction disk executes the rotation operation; and

**10**

a control unit including a photometry unit configured to extract, from a photometric waveform, a photometric waveform of a photometric value calculation period used for calculating a light intensity value regarding a liquid accommodated in the reaction cell, the photometric waveform being obtained by sampling a photometry signal that reflects a light intensity value of the transmitted light output from the spectroscopic analyzer,

wherein the control unit acquires a photometric waveform for each of the plurality of reaction cells held on the reaction disk from a photometry signal based on a photometry trigger signal, and sets the photometric value calculation period based on a time domain representing a flat waveform, the photometry signal being obtained by executing photometry of the plurality of reaction cells in an empty state or in a state where blank water is accommodated, the photometry trigger signal representing that each of the plurality of reaction cells crosses the optical axis of the light source, and the time domain being obtained regarding the photometric waveform for each of the plurality of reaction cells.

2. The automatic analyzer according to claim 1,
wherein regarding the photometric waveform for each of the plurality of reaction cells, the control unit obtains a photometry available period that is a time period where the waveform is flat and a photometry start available time from rising of the photometry trigger signal to start of the photometry available period, and sets a correction time where the photometric value calculation period starts from the rising of the photometry trigger signal based on the photometry available period and the photometry start available time obtained regarding the photometric waveform for each of the plurality of reaction cells.

3. The automatic analyzer according to claim 1, further comprising a position detection unit configured to output the photometry trigger signal,

wherein the position detection unit includes a plurality of detection plates provided corresponding to the plurality of reaction cells held on the reaction disk, respectively, and a detection plate detector configured to detect passage of the detection plate, and
the detection plate detector is provided at a position where the detection plate passes when a reaction cell corresponding to the detection plate crosses the optical axis of the light source.

4. The automatic analyzer according to claim 1,
wherein the control unit sets the photometric value calculation period common to the plurality of reaction cells.

5. The automatic analyzer according to claim 1,
wherein the control unit sets the photometric value calculation period for each of the plurality of reaction cells.

6. The automatic analyzer according to claim 5,
wherein the control unit sets the photometric value calculation period according to a slope of the photometric waveform in the time domain.

7. The automatic analyzer according to claim 4 or 5,
wherein the control unit sets the photometric value calculation period according to a rotational speed of the reaction disk.

8. The automatic analyzer according to claim 1,
wherein the control unit detects occurrence of an abnormality based on a local change of the photometry signal of the waveform in the time domain representing a flat waveform obtained regarding the photometric waveform for each of the plurality of reaction cells.

9. The automatic analyzer according to claim 8,
Wherein when the occurrence of the abnormality is detected, the control unit notifies the occurrence of the abnormality.

10. The automatic analyzer according to claim 8,
wherein the control unit detects a size of an abnormality occurrence position based on the local change of the photometry signal of the waveform.

11. The automatic analyzer according to claim 8,
wherein the control unit stores the flat waveform obtained regarding the photometric waveform for each of the plurality of reaction cells as measurement results at at least two different time points in chronological order, and compares the flat waveforms of the photometric waveforms at the different time points to specify a position where the abnormality of the reaction cell occurs.

12. The automatic analyzer according to claim 8,
wherein the control unit stores the flat waveform obtained regarding the photometric waveform for each of the plurality of reaction cells as measurement results at at least two different time points in chronological order, compares the flat waveforms of the photometric waveforms at the different time points to identify a degree of the abnormality of the reaction cell, and determines a replacement period of the reaction cell based on the identification result.

13. The automatic analyzer according to claim 1,
wherein the control unit detects a light flux diameter of the transmitted light that transmits through the reaction cell based on a photometric waveform regarding a position having a known size in the reaction cell.

14. The automatic analyzer according to claim 13,
wherein the control unit stores the detected light flux diameter as measurement results at at least two different time points in chronological order, and compares the light flux diameters at the different time points to detect an abnormality of an optical system of the transmitted light.

15. The automatic analyzer according to claim 14,
wherein when the abnormality of the optical system of the transmitted light is detected, the control unit notifies the detection.

16. The automatic analyzer according to claim 13,
wherein the control unit stores the detected light flux diameter as measurement results at at least two different time points in chronological order, and predicts a maintenance period based on a change between the light flux diameters at the different time points.

17. The automatic analyzer according to claim 1,
wherein when the photometry signal of the waveform substantially monotonously decreases or increases in the time domain representing a flat waveform obtained regarding the photometric waveform for each of the plurality of reaction cells, the control unit detects that a stirring failure of a reaction liquid in the reaction cell occurs.

18. The automatic analyzer according to claim 1,
wherein when the photometry signal of the waveform in the time domain representing a flat waveform obtained regarding the photometric waveform for each of the plurality of reaction cells changes substantially in an upwardly convex shape, the control unit detects that the measurement is executed in a state where a reaction liquid in the reaction cell is insufficient.

19. A timing setting method in an automatic analyzer including a reaction disk where a plurality of reaction cells are held on a circumference and configured to execute a rotation operation, a light source configured to emit light, a spectroscopic analyzer configured to detect transmitted light that transmits through a reaction cell crossing an optical axis of the light source when the reaction disk executes the rotation operation, and a control unit including a photometry unit configured to extract, from a photometric waveform, a photometric waveform of a photometric value calculation period used for calculating a light intensity value regarding a liquid accommodated in the reaction cell, the photometric waveform being obtained by sampling a photometry signal that reflects a light intensity value of the transmitted light output from the spectroscopic analyzer,
the timing setting method comprising allowing the control unit:

to acquire a photometric waveform for each of the plurality of reaction cells held on the reaction disk from a photometry signal based on a photometry trigger signal, the photometry signal being obtained by executing photometry of the plurality of reaction cells in an empty state or in a state where blank water is accommodated, the photometry trigger signal representing that each of the plurality of reaction cells crosses the optical axis of the light source, and
to set the photometric value calculation period based on a time domain representing a flat waveform obtained regarding the photometric waveform for each of the plurality of reaction cells.

20. The timing setting method according to claim 19, comprising allowing the control unit:

to obtain, regarding the photometric waveform for each of the plurality of reaction cells, a photometry available period that is a time period where the waveform is flat and a photometry start available time from rising of the photometry trigger signal to start of the photometry available period, and

to set a correction time where the photometric value calculation period starts from the rising of the photometry trigger signal based on the photometry available period and the photometry start available time obtained regarding the photometric waveform for each of the plurality of reaction cells.

21. The timing setting method according to claim 19, comprising allowing the control unit to set the photometric value calculation period common to the plurality of reaction cells.

22. The timing setting method according to claim 19, comprising allowing the control unit to set the photometric value calculation period for each of the plurality of reaction cells.

23. The timing setting method according to claim 22, comprising allowing the control unit to set the photometric value calculation period according to a slope of the photometric waveform in the time domain.

24. The timing setting method according to claim 21 or 22, comprising allowing the control unit to set the photometric value calculation period according to a rotational speed of the reaction disk.

[FIG. 1]

[FIG. 2]

200

(A-A CROSS-SECTIONAL VIEW)

201

204

203

202

112

(PLAN VIEW)

112$_M$

A

112$_1$

112$_2$

112$_3$

104

201$_M$

202

205

201$_1$

201$_2$

201$_3$

A

[FIG. 3A]

[FIG. 3B]

[FIG. 4]

PHOTOMETRY
TRIGGER SIGNAL T

WAVEFORM A

ta_st

ta

WAVEFORM B

tb_st

tb

WAVEFORM C

tc_st

tc

[FIG. 5]

EXECUTE PHOTOMETERY OF REACTION CELL ON REACTION DISK    S01

ACQUIRE PHOTOMETRY START AVAILABLE TIME t_st AND PHOTOMETRY AVAILABLE PERIOD t FROM PHOTOMETRIC WAVEFORM FOR EACH REACTION CELL    S02

ACQUIRE CORRECTION TIME $t_{cal\_st}$    S03

[FIG. 6]

PHOTOMETRY
TRIGGER SIGNAL T

WAVEFORM A
+WAVEFORM B
+WAVEFORM C

$t_{cal}\_st$

$t_{cal}$

[FIG. 7]

307

DATA PROCESSING UNIT

401

WAVEFORM i

PHOTOMETRIC
WAVEFORM
EXTRACTION
UNIT

$ti_{cal}\_st$

$t_{cal}$

$ti_{cal}\_st$
$t_{cal}$

402

PHOTOMETRIC WAVEFORM EXTRACTION
CONTROL UNIT

TOTAL NUMBER M
OF CELLS

INITIAL VALUE
CELL NUMBER

PHOTOMETRY
TRIGGER SIGNAL T

MAXIMUM
VALUE

INITIAL
VALUE

COUNTER

CELL #
=i

403

| CELL NUMBER | CORRECTION TIME tcal_st |
|---|---|
| 1 | $t1_{cal}\_st$ |
| 2 | $t2_{cal}\_st$ |
| ⋮ | ⋮ |
| i | $ti_{cal}\_st$ |
| ⋮ | ⋮ |
| M | $tM_{cal}\_st$ |

404

CORRECTION TIME
STORAGE MEMORY

EP 4 715 387 A1

[FIG. 8]

PHOTOMETRY
TRIGGER SIGNAL T

tx_st    tx

WAVEFORM X

$t_{cal}$

$tx_{cal\_st}$

ty_st    ty

WAVEFORM Y

$t_{cal}$

$ty_{cal\_st}$

19

[FIG. 9]

PHOTOMETRY
TRIGGER SIGNAL T

ti_st

WAVEFORM i
(IN STABLE STATE)

ti

ti_st_F

WAVEFORM i
(AT HIGH SPEED)

ti_F

ti_st_S

WAVEFORM i
(AT LOW SPEED)

ti_S

[FIG. 10A]

411

| CELL NUMBER | CORRECTION TIME tcal_st | CORRECTION TIME tcal_st_F | CORRECTION TIME tcal_st_S |
|---|---|---|---|
| 1 | $t1_{cal}\_st$ | $t1_{cal}\_st\_F$ | $t1_{cal}\_st\_S$ |
| 2 | $t2_{cal}\_st$ | $t2_{cal}\_st\_F$ | $t2_{cal}\_st\_S$ |
| ⋮ | ⋮ | ⋮ | ⋮ |
| i | $ti_{cal}\_st$ | $ti_{cal}\_st\_F$ | $ti_{cal}\_st\_S$ |
| ⋮ | ⋮ | ⋮ | ⋮ |
| M | $tM_{cal}\_st$ | $tM_{cal}\_st\_F$ | $tM_{cal}\_st\_S$ |

CORRECTION TIME STORAGE MEMORY

[FIG. 10B]

412

| IN STABLE STATE | AT HIGH SPEED | AT LOW SPEED |
|---|---|---|
| $t_{cal}$ | $t_{cal\_}F$ | $t_{cal\_}S$ |

PHOTOMETRIC VALUE CALCULATION PERIOD STORAGE MEMORY

[FIG. 11]

FOREIGN MATTER, BUBBLE, SCRATCH

REACTION CONTAINER

WAVEFORM i
(IN STABLE STATE)

ti

PHOTOMETRY
AVAILABLE PERIOD

ti

(a) NORMAL WAVEFORM

(b) ABNORMAL WAVEFORM

[FIG. 12]

LIGHT SOURCE

t1: TIME WHERE FOREIGN MATTER AND
LIGHT FLUX START TO OVERLAP EACH OTHER
t2: TIME WHERE FOREIGN MATTER AND
LIGHT FLUX COMPLETELY OVERLAP EACH OTHER
t3: TIME WHERE FOREIGN MATTER AND
LIGHT FLUX DO NOT OVERLAP EACH OTHER

POSITIONAL RELATIONSHIP
OF LIGHT SOURCE WHEN
SEEN FROM REACTION
CONTAINER

t 1     t 2     t 3

DIAMETER OF LIGHT FLUX (LIGHT FLUX WIDTH)

FOREIGN MATTER, BUBBLE, SCRATCH

REACTION CONTAINER

FOREIGN
MATTER
WIDTH

TRANSMITTED LIGHT
WAVEFORM WHEN REACTION
CONTAINER PASSES
THROUGH LIGHT SOURCE

PHOTOMETRY
AVAILABLE PERIOD

ti

ABNORMAL
SECTION

[FIG. 13]

LIGHT SOURCE

t1: TIME WHERE FOREIGN MATTER AND
LIGHT FLUX START TO OVERLAP EACH OTHER
t2: TIME WHERE FOREIGN MATTER AND
LIGHT FLUX COMPLETELY OVERLAP EACH OTHER
t3: TIME WHERE FOREIGN MATTER AND
LIGHT FLUX DO NOT OVERLAP EACH OTHER

POSITIONAL RELATIONSHIP
OF LIGHT SOURCE WHEN
SEEN FROM REACTION
CONTAINER

t 1    t 2    t 3

DIAMETER OF LIGHT FLUX (LIGHT FLUX WIDTH)

CELL FOR LIGHT FLUX WIDTH TEST
(LIGHT SHIELDING FOREIGN MATTER WITH
KNOWN WIDTH THAT IS INTENTIONALLY ADDED)

REACTION CONTAINER

FOREIGN
MATTER
WIDTH

TRANSMITTED LIGHT
WAVEFORM WHEN
REACTION CONTAINER
PASSES THROUGH
LIGHT SOURCE

PHOTOMETRY
AVAILABLE PERIOD

ti

ABNORMAL
SECTION

TRANSMITTED LIGHT WAVEFORM WHEN REACTION
CONTAINER PASSES THROUGH LIGHT SOURCE

WIDTH OF LIGHT FLUX
= (WIDTH OF ABNORMAL SECTION - FOREIGN MATTER WIDTH) ÷ 2

[FIG. 14]

REACTION
CONTAINER

LIGHT
→ DARK

CLOSE TO
LIQUID
LEVEL

OPTICAL AXIS

PHOTOMETRY
AVAILABLE
PERIOD

PHOTOMETRY
AVAILABLE
PERIOD

PHOTOMETRY
AVAILABLE
PERIOD

(a) NORMAL WAVEFORM

(b) ABNORMAL WAVEFORM
(NOT MIXED)

(c) ABNORMAL WAVEFORM
(LIQUID LEVEL IS LOW)

## INTERNATIONAL SEARCH REPORT

| International application No. |
| --- |
| **PCT/JP2024/015956** |

| A. | CLASSIFICATION OF SUBJECT MATTER |
| --- | --- |

*G01N 35/02*(2006.01)i; *G01N 21/27*(2006.01)i
FI:   G01N35/02 Z; G01N21/27 Z

According to International Patent Classification (IPC) or to both national classification and IPC

| B. | FIELDS SEARCHED |
| --- | --- |

Minimum documentation searched (classification system followed by classification symbols)

G01N35/02; G01N21/27

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2020-165850 A (FURUNO ELECTRIC COMPANY, LIMITED) 08 October 2020 (2020-10-08) fig. 1-8 | 1-4, 6, 19-21, 23 |
| Y | | 8-18 |
| A | | 5, 7, 22, 24 |
| Y | JP 2010-151519 A (HITACHI HIGH-TECHNOLOGIES CORPORATION) 08 July 2010 (2010-07-08) fig. 2 | 8-18 |
| Y | JP 2020-41929 A (HITACHI HIGH-TECHNOLOGIES CORPORATION) 19 March 2020 (2020-03-19) fig. 4 | 8-18 |

☐ Further documents are listed in the continuation of Box C.        ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **28 May 2024** | **18 June 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/015956**

| Patent document cited in search report | | | Publication date (day/month/year) | Patent family member(s) | | | Publication date (day/month/year) |
|---|---|---|---|---|---|---|---|
| JP | 2020-165850 | A | 08 October 2020 | CN | 111751299 | A | |
| | | | | fig. 1-8 | | | |
| JP | 2010-151519 | A | 08 July 2010 | (Family: none) | | | |
| JP | 2020-41929 | A | 19 March 2020 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H6167505 A
- JP 2009162719 A

- JP 2009162720 A